# EUROPEAN PATENT APPLICATION

(11) **EP 2 187 634 A1**
(43) Date of publication of application: **19.05.2010**
(21) Application number: 09158582.8
(22) Date of filing: 23.04.2009
(51) Int. Cl.: H04N 5/765, H04N 5/775, H04N 5/00, H04N 5/44

(54) **Recorder and control method thereof**

(30) Priority: 12.11.2008 JP 2008290293
(71) Applicant: Kabushiki Kaisha Toshiba, Minato-ku, Tokyo 105-8001 (JP)
(72) Inventor: Okada, Koji, Minato-ku Tokyo 105-8001 (JP)
(74) Representative: HOFFMANN EITLE

(57) **Abstract**

According to one embodiment, a recorder includes an input module (201, 203), a signal selector (202a, 204a), a demodulator (202b, 204b), a decoder (202c, 204c), a signal processor (206), and a controller (205). The input module (201, 203) receives digital television broadcast signals. The signal selector (202a, 204a) selects a signal from each of channels from the digital television broadcast signals. The demodulator (202b, 204b) demodulates the signal output from the signal selector (202a, 204a). The decoder (202c, 204c) decodes the signal demodulated by the demodulator (202b, 204b), and extracts information on sections from the digital television broadcast signals. The signal processor (206) performs predetermined signal processing on the signal decoded by the decoder (202c, 204c) and output a signal recordable on a recording module (270). The controller (205) controls the modules and includes a section extraction control module (250). The section extraction control module (250) divides a process of extracting information on sections into parts in a time-division manner with respect to each of the channels, and controls the decoder (202c, 204c) to suspend extraction of information on predetermined sections to skip part of the process. The sections are classified in advance.

## Description

### BACKGROUND

### 1. Field

One embodiment of the invention relates to a recorder and, more specifically, to a recorder that receives digital broadcasting and records multiple channels thereof, and a control method thereof.

### 2. Description of the Related Art

For example, Japanese Patent Application Publication (KOKAI) No. 2006-332873 discloses a conventional recorder capable of recording multiple channels. With a common technology for recording multiple channels of digital broadcasting, signal processing is performed for each of multiple channels to record a plurality of programs (multi-channel recording). Accordingly, processing load for recording the programs is in proportion to the number of channels. That is, the processing load is represented as (processing load to record one channel) x (the number of the channels). Besides, the conventional multi-channel recorder simply obtains sections in the same manner for input from respective tuners. Consequently, as the number of channels that the recorder records increases, the processing load increase. In multi-channel recording, if the recorder is provided with, depending on the processing load, a plurality of signal processing devices that decode a digital broadcast signal (including the extraction of sections) and the like, there is no problem in terms of the performance; however, the cost increases. Thus, there is a need for a technology that enables a single signal processing device (or only a small number of signal processing devices) to perform multi-channel processing.

With a single signal processing device (or only a small number of signal processing devices), there is a limit on the number of channels that can be simultaneously recorded. To realize the function of simultaneously recording multiple channels, such as full channel recording function for recording all channels, it is necessary to reduce the processing load without affecting a series of recording processes.

It is therefore an object of the invention to provide a recorder capable of reducing the processing load without affecting a series of recording processes to realize the function of simultaneously recording multiple channels such as the function of recording all channels, and a method thereof.

### SUMMARY OF THE INVENTION

To achieve the object mentioned above, according to an aspect of the invention, a recorder comprises an input module, a signal selector, a demodulator, a decoder, a signal processor, and a controller. The input module is configured to receive digital television broadcast signals. The signal selector is configured to select a signal from each of channels from the digital television broadcast signals received by the input modules. The demodulator is configured to demodulate the signal output from the signal selector. The decoder is configured to decode the signal demodulated by the demodulator, and extract information on sections from the digital television broadcast signals. The signal processor is configured to perform predetermined signal processing on the signal decoded by the decoder to obtain a signal recordable on a recording module and output the signal. The controller is configured to control the modules, and includes a section extraction control module. The section extraction control module is configured to divide a process of extracting information on sections into parts in a time-division manner with respect to each of the channels, and control the decoder to suspend extraction of information on predetermined sections to skip part of the process. The sections are classified in advance.

According to another aspect of the invention, a method of controlling a recorder comprising: an input module receiving digital television broadcast signals; a signal selector selecting a signal from each of channels from the digital television broadcast signals received by the input module; a demodulator demodulating the signal output from the signal selector; a decoder decoding the signal demodulated by the demodulator and extracting information on sections from the digital television broadcast signals; a signal processor performing predetermined signal processing on the signal decoded by the decoder to obtain a signal recordable on a recording module and output the signal; and a controller controlling the modules. The controller divides a process of extracting information on sections into parts in a time-division manner with respect to each of the channels, and controls the decoder to suspend extraction of information on predetermined sections to skip part of the process. The sections are classified in advance.

As described above, according to an aspect of the invention, the process of extracting sections is divided into parts in a time-division manner with respect to each channel to skip some parts of the process. Therefore, upon simultaneously recording programs from multiple channels, there is no need to increase devices necessary for recording according to the number of channels to be recorded. Moreover, the recordable channels can be increased without affecting the recording of a data stream of a program.

### BRIEF DESCRIPTION OF THE SEVERAL VIEWS OF THE DRAWINGS

A general architecture that implements the various features of the invention will now be described with reference to the drawings . The drawings and the associated descriptions are provided to illustrate embodiments of the invention and not to limit the scope of the invention.

FIG. 1 is an exemplary schematic diagram of a use environment of a digital television (TV) broadcast recorder according to an embodiment of the invention;
FIG. 2 an exemplary block diagram of a signal processing system of the digital TV broadcast recorder in the embodiment;
FIG. 3 is an exemplary schematic diagram for explaining a section extraction process with a section extraction control function in the embodiment; and
FIG. 4 is an exemplary flowchart of the operation of a controller to control the section extraction process with the section extraction control function in the embodiment.

### DETAILED DESCRIPTION

Various embodiments according to the invention will be described hereinafter with reference to the accompanying drawings.

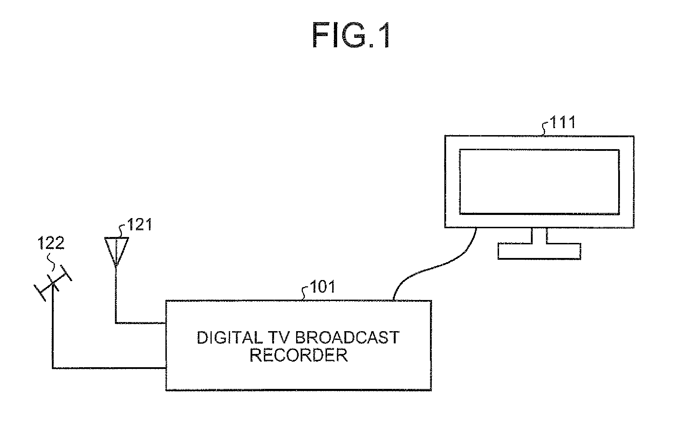

FIG. 1 is a schematic diagram of the use environment of a digital television (TV) broadcast recorder 101 according to an embodiment of the invention. Incidentally, digital TV broadcasting is standardized, and the details defined by the standard will not be described herein.

As illustrated in FIG. 1, an antenna 121 for receiving BS/CS digital broadcasting and an antenna 122 for receiving digital terrestrial broadcasting are connected to the input side of the digital TV broadcast recorder 101. Meanwhile, a digital TV broadcast receiver 111 is connected to the output side of the digital TV broadcast recorder 101. Upon receipt of a digital TV broadcast signal, the digital TV broadcast recorder 101 decodes it, thereby recording a program. The digital TV broadcast recorder 101 sends video and audio signals of a program currently being broadcast or a recorded program to the digital TV broadcast receiver 111. With this, the program can be viewed on the digital TV broadcast receiver 111.

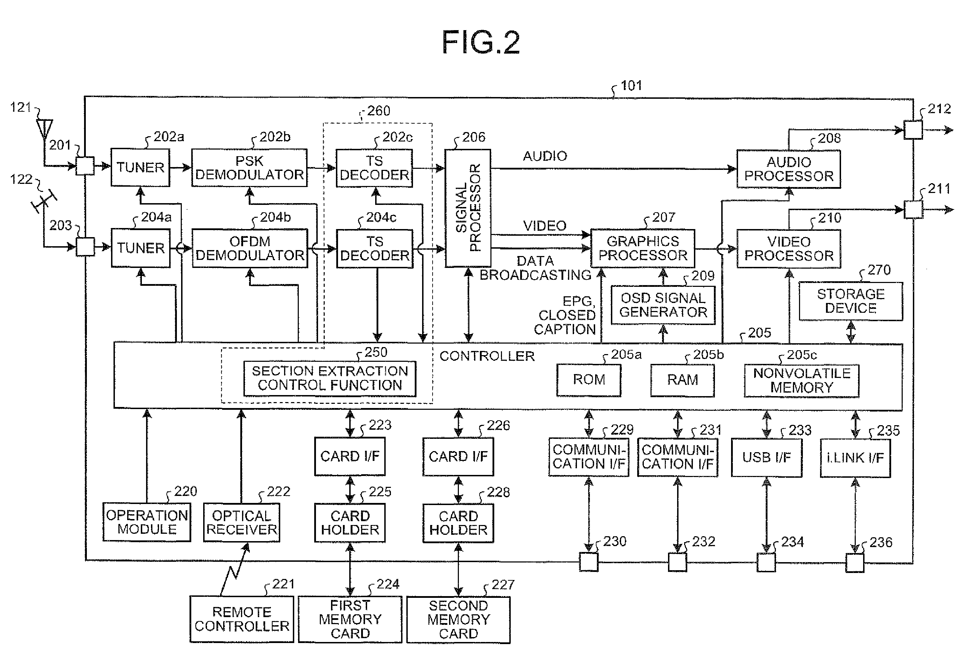

While the digital TV broadcast recorder 101 is illustrated in FIG. 1 (and FIG. 2) as having only two systems, one for receiving BS/CS digital broadcasting and the other for receiving digital terrestrial broadcasting, this is for simplicity only. The digital TV broadcast recorder 101 of the embodiment is capable of recording programs from multiple channels. Accordingly, the digital TV broadcast recorder 101 is provided with a plurality of receiving circuits such as tuners for receiving BS/CS digital broadcasting and also those for receiving digital terrestrial broadcasting.

A description will be give of the hardware configuration of the digital TV broadcast recorder 101. FIG. 2 is a block diagram of a signal processing system of the digital TV broadcast recorder 101.

When the antenna 121 for receiving BS/CS digital broadcasting receives a satellite digital TV broadcast signal, the broadcast signal is sent to a tuner 202a for satellite digital broadcast via an input terminal 201. According to a control signal from a controller 205, the tuner 202a selects a broadcast signal from a desired channel, and outputs the broadcast signal to a phase shift keying (PSK) demodulator 202b.

The PSK demodulator 202b demodulates the broadcast signal received from the tuner 202a according to a control signal from the controller 205. Thus, the PSK demodulator 202b acquires a transport stream (TS) containing a desired program, and outputs it to a TS decoder 202c.

The TS decoder 202c performs TS decoding on a multiplexed TS signal according to a control signal from the controller 205. The TS decoder 202c also depacketizes digital video and audio signals of the desired program to obtain a packetized elementary stream (PES). The TS decoder 202c then outputs the PES to an STD buffer (not illustrated) in a signal processor 206. In addition, the TS decoder 202c sends section information transmitted via digital broadcasting to a section processor (not illustrated) in the signal processor 206.

When the antenna 122 for receiving digital terrestrial broadcasting receives a digital terrestrial TV broadcast signal, the broadcast signal is sent to a tuner 204a for digital terrestrial broadcast via an input terminal 203. According to a control signal from the controller 205, the tuner 204a selects a broadcast signal from a desired channel, and outputs the broadcast signal to an orthogonal frequency division multiplexing (OFDM) demodulator 204b.

The OFDM demodulator 204b demodulate the broadcast signal received from the tuner 204a according to a control signal from the controller 205. Thus, the OFDM demodulator 204b acquires a transport stream containing a desired program, and outputs it to a TS decoder 204c.

The TS decoder 204c performs TS decoding on a multiplexed TS signal according to a control signal from the controller 205. The TS decoder 204c also depacketizes digital video and audio signals of the desired program to obtain a PES. The TS decoder 204c then outputs the PES to the STD buffer in the signal processor 206. In addition, the TS decoder 204c sends section information transmitted via digital broadcasting to the section processor in the signal processor 206.

While a user is viewing a TV program, the signal processor 206 selectively performs predetermined digital signal processing on the digital video and audio signals received from the TS decoder 202c and those received from the TS decoder 204c. Then, the signal processor 206 outputs the video signal to a graphics processor 207 and the audio signal to an audio processor 208. While a program is being recorded, the signal processor 206 selectively performs predetermined digital signal processing on the digital video and audio signals received from the TS decoder 202c and those received from the TS decoder 204c. Then, the signal processor 206 stores the signals in a storage device (for example, HDD) 270 through the controller 205. While a recorded program is being reproduced, the signal processor 206 performs predetermined digital signal processing on data of the recorded program read from the storage device 270 through the controller 205. Then, the signal processor 206 outputs the data to the graphics processor 207 and the audio processor 208.

The controller 205 receives various types of data for obtaining a program such as key information for BS conditional access system (B-CAS) descrambling, electronic program guide (EPG) information, program attribute information such as program category, closed caption information such as program specific information (PSI) and service information (SI), and the like. From the received information, the controller 205 generates image data to display an EPG or closed captions, and outputs the image data to the graphics processor 207. Besides, the controller 205 has the function of controlling the recording and programmed or timer recording of a program. When a user programs the recording of a program, the controller 205 displays EPG information on an external display device such as the digital TV broadcast recorder 101. Having received input from the user through an operation module 220 or a remote controller 221, the controller 205 stores information specified by the user in a predetermined storage module. Thus, the controller 205 controls the tuners 202a and 204a, the PSK demodulator 202b, the OFDM demodulator 204b, the TS decoders 202c and 204c, and the signal processor 206 so that a specified program is to be recorded at a preset time. Further, with full channel recording function, when automatically recording programs of all available channels, the controller 205 controls the respective modules regardless of time to record the programs.

From the section information received from the TS decoder 202c (204c), the section processor outputs to the controller 205 various types of data for obtaining a program, EPG information, program attribute information such as program category, closed caption information such as PSI and SI, and the like.

The graphics processor 207 synthesizes the following signals: (1) a digital video signal fed from an AV decoder (not illustrated) in the signal processor 206, (2) an on screen display (OSD) signal generated by an OSD signal generator 209, (3) image data of data broadcasting, and (4) an EPG/closed caption signal generated by the controller 205. The graphics processor 207 outputs the synthesized signals to a video processor 210. In addition, to display a closed-captioned broadcast video or program with closed captions, based on closed caption data under the control of the controller 205, the graphics processor 207 superimposes the closed caption data on the video signal.

The digital video signal output from the graphics processor 207 is input to the video processor 210. The video processor 210 converts the input digital video signal to an analog video signal in a format displayable on the digital TV broadcast receiver 111. The video processor 210 then outputs the analog video signal to the digital TV broadcast receiver 111 via an output terminal 211 to display the video thereon.

The audio processor 208 converts the input digital audio signal to an analog audio signal in a format reproducible by the digital TV broadcast receiver 111. The audio processor 208 then outputs the analog audio signal to the digital TV broadcast receiver 111 via an output terminal 212 to reproduce the audio thereon.

The controller 205 controls the overall operation of the digital TV broadcast recorder 101 including the operation of receiving various types of signals as described above. The controller 205 comprises a built-in central processing unit (CPU). Upon receipt of operation information sent from the operation module 220 or operation information sent from the remote controller 221 via an optical receiver 222, the controller 205 controls the respective modules according to the operation information.

The controller 205 performs this control using mainly a read only memory (ROM) 205a, a random access memory (RAM) 205b, and a nonvolatile memory 205c. The ROM 205a stores a control program executed by the CPU. The RAM 205b provides a work area to the CPU. The nonvolatile memory 205c stores various types of setting information, control information, and the like.

The controller 205 is connected via a card interface (I/F) 223 to a card holder 225 into which a first memory card 224 can be inserted. With this, the controller 205 can communicate data with the first memory card 224 in the card holder 225 through the card I/F 223.

Similarly, the controller 205 is connected via a card I/F 226 to a card holder 228 into which a second memory card 227 can be inserted. With this, the controller 205 can communicate data with the second memory card 227 in the card holder 228 through the card I/F 226.

Further, the controller 205 is connected via a communication I/F 229 to a first LAN terminal 230. With this, the controller 205 can communicate data with a LAN-compatible device (for example, an external HDD) connected to the first LAN terminal 230 through the communication I/F 229. The controller 205 has a dynamic host configuration protocol (DHCP) server function, and, in this case, the controller 205 assigns an internet protocol (IP) address to the LAN-compatible device connected to the first LAN terminal 230 to control it.

Similarly, the controller 205 is connected via a communication I/F 231 to a second LAN terminal 232. With this, the controller 205 can communicate data with various types of LAN-compatible devices connected to the second LAN terminal 232 through the communication I/F 231.

Still further, the controller 205 is connected via a USB I/F 233 to a USB terminal 234. With this, the controller 205 can communicate data with various types of devices connected to the USB terminal 234 through the USB I/F 233.

Still further, the controller 205 is connected via an i.LINK I/F 235 to an i.LINK terminal 236. With this, the controller 205 can communicate data with various types of devices connected to the i.LINK terminal 236 through the i.LINK I/F 235.

The controller 205 has a section extraction control function 250. With the section extraction control function 250, the controller 205 performs section extraction control as described below.

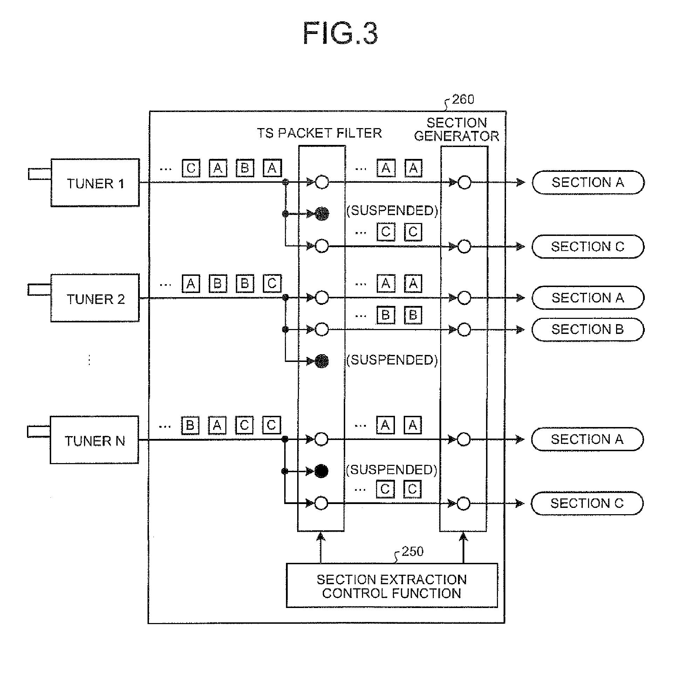

With reference to FIG. 3, a description will be given of the section extraction control performed by the controller 205 with the section extraction control function 250. FIG. 3 is a schematic diagram for explaining a section extraction process with the section extraction control function 250. Incidentally, a block 260 in FIG. 3 corresponds to the block 260 illustrated in FIG. 2.

A series of sections A, B, and C decoded by the TS decoder 202c (204c) is divided into groups of different types of sections and extracted. Each series of the same type of sections thus extracted is reassembled (section generation by a section generator), and is sent to the signal processor 206 as a section A, B, or C with respect to each channel.

According to the embodiment, the controller 205 controls the section extraction with the section extraction control function 250 such that the process of extracting sections for recording a data stream of a program is divided into parts in a time-division manner with respect to each channel to skip some parts of the process. In other words, the extraction of part of sections is temporarily suspended. With this control, the processing load of the apparatus can be reduced as a whole without affecting the recording of the data stream of the program. Note that the sections are classified in advance taking into account the necessity of them as described below.

FIG. 3 illustrates three types of sections A, B, and C. In the example of FIG. 3, the section A is always extracted, while the extraction of the sections B and C is temporarily suspended.

It is assumed herein that the section A is always necessary to record the data stream of the program. Therefore, as illustrated in FIG. 3, the section A is always extracted from input through all tuners 1 to N. The section A may be, for example, an entitlement control message (ECM) required for B-CAS descrambling.

It is also assumed herein that the section B is not directly related to the recording of the data stream of the program and is not frequently updated. Therefore, the section B is extracted from input through one tuner (the tuner 2 in FIG. 3) at a time, and is acquired cyclically in sequence from input through the tuners 1 to N. The section B may be, for example, an event information table (EIT) that stores information related to the title, broadcast date, and content of the program.

As with the section B, the section C is extracted cyclically in sequence from input through the tuners 1 to N. The section C affects the recording of the data stream of the program, and therefore is extracted from two tuners (the tuners 1 and N in FIG. 3) at the same time. In this manner, the section C is extracted more frequently than the section B while the processing load is reduced. The section C may be, for example, a program map table (PMT) that stores a packed ID for identifying a packet subjected to scrambling.

In the example of FIG. 3, the section C is extracted from input through the tuners 1 and N, while the section B is extracted from input through the tuner B. It is assumed herein that, at this point, the extraction of the sections B and C is temporarily suspended with respect to input through the other tuners.

As described above, with the section extraction control function 250, the controller 205 control a TS packet filter to extract the sections B and C as well as to suspend the extraction of them.

How to control the extraction of sections and the suspension thereof may be determined in advance taking into account the overall processing load. This may also be dynamically determined during the section extraction control. Regarding the hardware configuration, the TS packet filter and the section generator illustrated in FIG. 3 may be implemented in one chip with the CPU that realizes the section extraction control function 250.

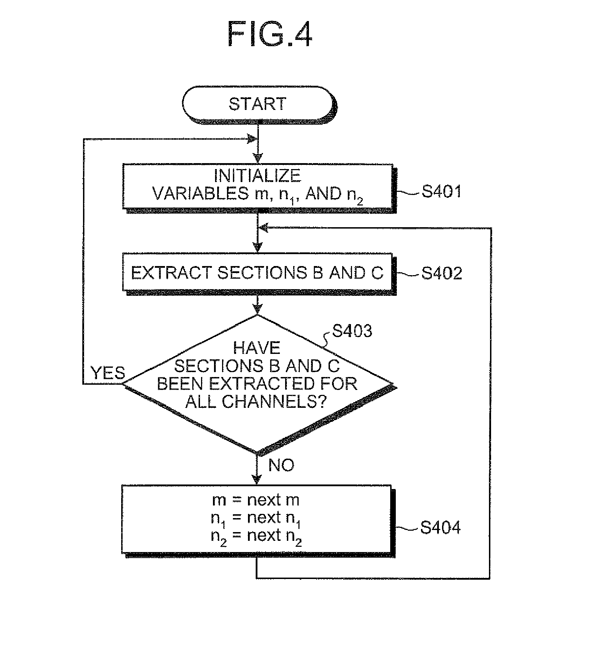

With reference to FIG. 4, a description will now be given of the operation of the controller 205 to control the section extraction process with the section extraction control function 250. FIG. 4 is a flowchart of an example of the operation of the controller 205 to control the section extraction process with the section extraction control function 250. The control process described below is performed by the controller 205 with the section extraction control function 250.

It is assumed herein that channel numbers 1 to N are assigned to inputs of selected channels from the tuners 1 to N (for example, N = 8), respectively. In FIG. 4, variables m, n₁, and n₂ are used, by way of example, to indicate the channel numbers The section B is extracted with respect to a channel m, while the section C is extracted with respect to channels n₁ and n₂.

First, the controller 205 initializes the variables m, n₁, and n₂ (S401). That is the controller 205 sets, for example, m = 3, n₁ = 1, and n₂ = N.

The controller 205 then controls the TS decoders 202c and 204c to extract sections B and C of channels (S402). The sections B and C correspond to the variables, respectively, and also the channels correspond to the variables, respectively.

Thereafter, the controller 205 determines whether sections B and C have been extracted for all the channels (S403) .

When the controller 205 determines that sections B and C have been extracted for all the channels (Yes at S403), the process returns to S401 and the above process is repeated.

On the other hand, when the controller 205 determines that sections B and C have not yet been extracted for all the channels (No at S403), the controller 205 substitutes next variables next m, next n₁, and next n₂ for the variables m, n₁, and n₂ (S404), and the process returns to S402. Thus, the process after S402 is repeated until sections B and C have been extracted for all the channels. Incidentally, the variables next m, next n₁, and next n₂ next to the variables m, n₁, and n₂ are determined so that the process is performed cyclically in sequence on all the channels to be recorded.

The flow of the control process is described above by way of example only without limitation. Any control process may be applied that is capable of extracting section information cyclically in sequence for all channels to be recorded.

As described above, according to the embodiment, in an apparatus that is provided with a plurality of tuners and records multiple channels of digital TV broadcasting, the process of extracting sections is divided into parts in a time-division manner with respect to each channel to skip some parts of the process. Besides, the parts of the process are skipped taking into account the necessity of the respective sections for recording a data stream of a program. Thus, the processing load of the apparatus can be reduced as a whole without affecting the recording process.

Although an embodiment of the invention is described above as being applied to a digital TV broadcast recorder, this is by way of example only. For example, the embodiment may be applied to a digital TV broadcast receiver.

The various modules of the systems described herein can be implemented as software applications, hardware and/or software modules, or components on one or more computers, such as servers. While the various modules are illustrated separately, they may share some or all of the same underlying logic or code.

While certain embodiments of the inventions have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions . The accompanying claims and their equivalents are intended to cover such forms or modifications as would fall within the scope and spirit of the inventions.

## Claims

1. A recorder comprising:
an input module (201, 203) configured to receive digital television broadcast signals;
a signal selector (202a, 204a) configured to select a signal from each of channels from the digital television broadcast signals received by the input module (201, 203);
a demodulator (202b, 204b) configured to demodulate the signal output from the signal selector (202a, 204a);
a decoder (202c, 204c) configured to decode the signal demodulated by the demodulator (202b, 204b), and extract information on sections from the digital television broadcast signals;
a signal processor (206) configured to perform predetermined signal processing of the signals decoded by the decoder (202c, 204c) to obtain a signal recordable on a recording module (270) and output the signal; and
a controller (205) configured to control the input module (201, 203), the signal selector (202a, 204a), the demodulator (202b, 204b), the decoder (202c, 204c), and the signal processor (206), the controller (205) comprising
a section extraction control module (250) configured to divide a process of extracting information on sections into parts in a time-division manner with respect to each of the channels, and control the decoder (202c, 204c) to suspend extraction of information on predetermined sections to skip part of the process, the sections being classified in advance.

2. The recorder of Claim 1, wherein the controller (205) is configured to divide the process of extracting information on sections into parts in a time-division manner with respect to each of the channels such that extraction of information on sections is performed cyclically in sequence for the channels.

3. The recorder of Claim 1, wherein the section extraction control module (250) is configured to control the decoder (202c, 204c) to always extract information on a section necessary for recording of a data stream of a program.

4. The recorder of Claim 1, wherein the section extraction control module (250) is configured to control the decoder (202c, 204c) to extract information on a section not directly related to recording of a data stream of a program cyclically in sequence with respect to one of the channels.

5. The recorder of Claim 1, wherein the section extraction control module (250) is configured to control the decoder (202c, 204c) to extract information on a section that is not always necessary and affects recording of a data stream of a program cyclically in sequence with respect to at least two of the channels.

6. The recorder of Claim 1, wherein the controller (205) is configured to control recording of a data stream of a program to record all channels contained in the digital television broadcast signals.

7. The recorder of Claim 1, further comprising a display module, wherein
the signal processor (206) is configured to perform predetermined signal processing on the signal to obtain a video signal and output the video signal to the display module, and
the display module is configured to display the video signal.

8. A method of controlling a recorder comprising:
an input module receiving digital television broadcast signals;
a signal selector selecting a signal from each of channels from the digital television broadcast signals received by the input module;
a demodulator demodulating the signal output from the signal selector;
a decoder decoding the signal demodulated by the demodulator, and extracting information on sections from the digital television broadcast signals;
a signal processor performing predetermined signal processing on the signal decoded by the decoder to obtain a signal recordable on a recording module and output the signal; and
a controller controlling the modules, wherein
the controller dividing a process of extracting information on sections into parts in a time-division manner with respect to each of the channels, and controlling the decoder to suspend extraction of information on predetermined sections to skip part of the process, the sections being classified in advance.
